# EUROPÄISCHE PATENTSCHRIFT

(11) **EP 0 836 965 B1**
(45) Veröffentlichungstag und Bekanntmachung des Hinweises auf die Patenterteilung: **29.01.2003**
(21) Anmeldenummer: 97116014.8
(22) Anmeldetag: 15.09.1997
(51) Int. Cl.: B60R 1/00, B60R 11/04

(54) **In einem Kraftfahrzeug angeordnetes Display**
Display mounted in a motor vehicle
Dispositif d'affichage monté dans un véhicule automobile

(30) Priorität: 27.09.1996 DE 19639673
(43) Veröffentlichungstag der Anmeldung: 22.04.1998
(73) Patentinhaber: DaimlerChrysler AG, 70567 Stuttgart (DE)
(72) Erfinder: Haller, Uwe, 75239 Eisingen (DE); Leschke, Harald, 71067 Sindelfingen (DE)

(56) Entgegenhaltungen:
- WO-A-97/01246
- DE-A- 4 317 136
- DE-U- 9 306 989
- DE-U- 29 612 536
- US-A- 5 243 417
- US-A- 5 289 321

## Beschreibung

Die Erfindung betrifft ein in einem Kraftfahrzeug angeordnetes Display.

Bei Fahrzeugen derzeitiger Bauart wird im allgemeinen ein in einer Sonnenblende angeordneter Spiegel als sogenannter Schminkspiegel verwendet.

Durch die Verwendung von elektrochromem Glas zur Verringerung der Sonneneinstrahlung in den Passagierraum eines Fahrzeuges kann eine Sonnenblende entfallen; mit dieser entfällt dann auch der Schminkspiegel, wenn nicht extra für diesen ein Halter vorgesehen wird.

Es sind bereits Kraftfahrzeuge bekannt (DE 32 00 294 A1, DE 71 02 936 U1, DE 1246443 B, WO 96/21581 A 1, JP 6-262981 A)), bei welchen im Bereich der Frontscheibe ein Display angeordnet ist, in welches die von einer am Heck des Fahrzeuges angeordneten externen Kamera aufgenommene Situation hinter dem Fahrzeug als Bild eingespeist wird.

Ferner ist ein Kraftfahrzeug bekannt (DE 42 38 275 A1), bei welchem im Bereich des Innenrückblickspiegels eine Kamera angeordnet ist, welche zur Prävention von Straftaten eine das Fahrzeug besteigende Person mittels Bildaufnahme erfaßt.

Des weiteren sind Bildtelefone bekannt, bspw. von Telekom oder AT&T, bei welchen in den Wählapparat ein schwenkbares Display mit integrierter Kamera angeordnet ist. Das Display zeigt hierbei als Bild ein Objekt, das von einer Kamera am Wählapparat des Gesprächspartners aufgenommen wird. Ergänzend kann das Display auf Eigenbildkontrolle oder Bild-in-Bild-Funktion umgeschaltet werden.

Aufgabe der Erfindung ist es, bei Wegfall einer Sonnenblende mit sogenanntem Schminkspiegel gleichwohl einen solchen bereitzustellen.

Diese Aufgabe wird mit den Merkmalen des Anspruches 1 gelöst, wobei die Merkmale der Unteransprüche vorteilhafte Aus- und Weiterbildungen kennzeichnen.

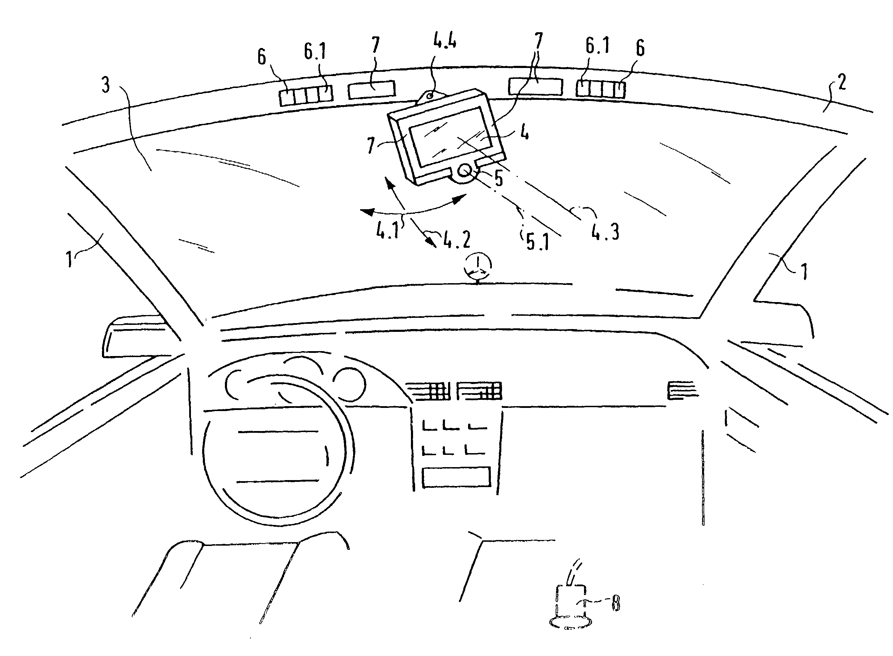

Ein Ausführungsbeispiel der Erfindung ist in der einzigen Figur der Zeichnung dargestellt.

In der aus den beiden A-Säulen 1 und dem Dachrahmen 2 gebildeten Aufnahme eines Kraftfahrzeuges ist die Windschutzscheibe 3 aus elektrochromem Glas befestigt. Etwa fahrzeugmittig des Dachrahmens 2 ist an diesem ein Display 4 so angeordnet 4.4, daß es - wie ein Innenrückblickspiegel - in die Richtungen 4.1, 4.2 schwenkbar ist. In das Display 4 ist eine Kamera 5 integriert, wobei die Achse 5.1 der Kamera 5 und eine senkrecht auf dem Display 4 stehende Achse 4.3 achsparallel verlaufen. Hierdurch wird sichergestellt, daß ein von der Kamera aufgenommenes Objekt, bspw. das Gesicht des Beifahrers, auf dem Display verzerrungsfrei als Spiegelbild dargestellt wird. Dergestalt erfüllt also das Display mit Kamera die Funktion eines "Schminkspiegels". In bevorzugter Weise ist das Display 4 fremdkraftbetätigt schwenkbar, wobei das fremdkraftbetätigte Schwenken mittels eines Bedienschalters 6 auslösbar ist. Die Fremdkraftbetätigung kann hierbei wie bei einem bekannten elektrisch verstellbaren Außenspiegel erfolgen. Zur besseren Ausleuchtung des Objekts und/oder des Spiegelbildes sind im oder um das Display Beleuchtungseinrichtungen 7 angeordnet, bspw. im Rahmen des Displays oder im Dachrahmen nahe des Displays. Um die Anordnung in vergleichbarer Größe wie einen bekannten Innenspiegel oder Schminkspiegel zu halten, ist das Display vorzugsweise als Farb-LC-Display und die Kamera vom miniaturisierten Typ CCD ausgebildet.

Von besonderer Bedeutung ist die Anordnung dann, wenn das Display 4 in Verbindung mit einer weiteren externen Kamera 8 welche im Heckbereich des Fahrzeuges angeordnet ist und die Situation hinter dem Fahrzeug als Bild erfaßt und in das Display einspeist, verwendet wird, da dann des weiteren die Funktion einer Rückblickeinrichtung - statt des bekannten Innenrückblickspiegels - bereitgestellt ist. In diesem Fall sind die Darstellungen der von den Kameras 5,8 erfaßten Bilder durch einen Umschalter 6.1 umschaltbar; z.B.: wird die auf dem Display üblicherweise dargestellte Situation hinter dem Fahrzeug bei Betätigung des Umschalters 6.1 ausgeblendet und das von der dann aktivierten Kamera 5 aufgenommene Objekt als Spiegelbild dargestellt. Ein derartiger Betriebsmodus ist bei Vorhandensein eines zweiten Außenspiegels zulässig.

## Patentansprüche

1. Spiegel für ein Kraftfahrzeug, der ein Display aufweist, in welchem eine Kamera derart integriert ist, dass ein von der Kamera aufgenommenes und vor dem Display befindliches Objekt auf dem Display als Spiegelbild dargestellt wird.

2. Display nach Anspruch 1,
**dadurch gekennzeichnet,**
**daß** die Achse (5.1) der Kamera (5) und eine senkrecht auf dem Display (4) stehende Achse (4.3) achsparallel bzw. leicht konvergierend verlaufen.

3. Display nach Anspruch 1,
**dadurch gekennzeichnet,**
**daß** das Display (4) in etwa fahrzeugmittig am vorderen Dachrahmen (2) schwenkbar (4.4) angeordnet ist.

4. Display nach Anspruch 3,
**dadurch gekennzeichnet,**
**daß** das Display (4) fremdkraftbetätigt schwenkbar ist.

5. Display nach Anspruch 4,
**dadurch gekennzeichnet,**
**daß** das fremdkraftbetätigte Schwenken mittels eins Bedienschalters (6)auslösbar ist.

6. Display nach Anspruch 1,
**dadurch gekennzeichnet,**
**daß** im oder um das Display (4) Beleuchtungseinrichtungen (7) angeordnet sind.

7. Display nach Anspruch 1,
**dadurch gekennzeichnet,**
**daß** das Display (4) als Farb-LC-Display ausgebildet ist.

8. Display nach Anspruch 1,
**dadurch gekennzeichnet,**
**daß** die Kamera (5) vom Typ CCD ausgebildet ist.

9. Display nach Anspruch 1,
**dadurch gekennzeichnet,**
**daß** das Display (4) in Verbindung mit einer weiteren externen Kamera (8) als Rückblickeinrichtung ausgebildet ist.

10. Display nach Anspruch 9,
**dadurch gekennzeichnet,**
**daß** die Darstellungen der von den Kameras (5; 8) erfaßten Bilder auf dem Display (4) umschaltbar sind.

## Claims

1. Mirror for a motor vehicle, having a display, in which a camera is integrated so that an object photographed by the camera and disposed ahead of the display is presented on the display as a mirror image.

2. Display as claimed in claim 1,
**characterised in that**
the axis (5.1) of the camera (5) and an axis (4.3) perpendicular to the display (4) extend axis-parallel or converge slightly.

3. Display as claimed in claim 1,
**characterised in that**
the display (4) is mounted so as to be pivotable (4.4) on the front roof frame (2) substantially at the vehicle centre.

4. Display as claimed in claim 3,
**characterised in that**
the display (4) can be pivoted by a separate power system.

5. Display as claimed in claim 4,
**characterised in that**
the separate power system operating the pivoting action can be activated by means of a control switch (6).

6. Display as claimed in claim 1,
**characterised in that**
lighting units (7) are provided in or around the display (4).

7. Display as claimed in claim 1,
**characterised in that**
the display (4) is a colour LC display.

8. Display as claimed in claim 1,
**characterised in that**
the camera (5) is of the CCD type.

9. Display as claimed in claim 1,
**characterised in that**
the display (4) is designed as a rear-view system communicating with another external camera (8).

10. Display as claimed in claim 9,
**characterised in that**
it is possible to switch between the presentations of the images picked up by the cameras (5; 8) on the display (4).

## Revendications

1. Miroir pour un véhicule automobile qui présente un affichage dans lequel une caméra est intégrée de telle façon qu'un objet se trouvant devant l'affichage et saisi par la caméra est représenté sur l'affichage comme image réfléchie.

2. Affichage selon la revendication 1, **caractérisé en ce que** l'axe (5.1) de la caméra (5) et un axe vertical (4.3) situé sur l'affichage (4) sont parallèles à l'axe voire légèrement convergents.

3. Affichage selon la revendication 1, **caractérisé en ce que** l'affichage (4) pivote (4.4) et est disposé à peu près au milieu du véhicule sur le cadre avant de la toiture (2).

4. Affichage selon la revendication 3, **caractérisé en ce que** l'affichage (4) pivote par servo-actionnement.

5. Affichage selon la revendication 4, **caractérisé en ce que** le pivotement servo-actionné est déclenché au moyen d'un interrupteur de commande (6).

6. Affichage selon la revendication 1, **caractérisé en ce que** des dispositifs d'éclairage (7) sont disposés dans ou autour de l'affichage (4).

7. Affichage selon la revendication 1, **caractérisé en ce que** l'affichage (4) est formé par un affichage à cristaux liquides couleur.

8. Affichage selon la revendication 1, **caractérisé en ce que** la caméra (5) est une caméra de type DTC.

9. Affichage selon la revendication 1, **caractérisé en ce que** l'affichage (4) en relation avec une autre caméra (8) extérieure forme un dispositif de visée arrière.

10. Affichage selon la revendication 9, **caractérisé en ce que** les représentations des images captées par les caméras (5 ; 8) peuvent être commutées sur l'affichage (4).
